# EUROPÄISCHE PATENTANMELDUNG

(11) **EP 2 072 176 A1**
(43) Veröffentlichungstag der Anmeldung: **24.06.2009**
(21) Anmeldenummer: 07123914.9
(22) Anmeldetag: 21.12.2007
(51) Int. Cl.: B23K 26/10, B23K 26/34, B23P 6/00, F01D 5/28, F01D 5/00

(54) **Verfahren zur Herstellung einer Erosionsschutzschicht aus Stahl durch Laserauftragschweissen; Bauteil mit einer solchen Erosionsschutzschicht**

(71) Anmelder: Sulzer Markets and Technology AG, 8401 Winterthur (CH)
(72) Erfinder: Peters, Thomas, Dr., 8404 Winterthur (CH); Denzler, Eduard, 8353 Elgg (CH); Ernst, Peter, Dr., 8174 Stadel (CH); Danner, Martin, 8404 Winterthur (CH); Cheaitany, Fouad, 8408 Winterthur (CH)
(74) Vertreter: Sulzer Management AG

(57) **Zusammenfassung**

Diese Anmeldung betrifft ein Verfahren zur Herstellung einer Erosionsschutzschicht (3) auf einem metallischen Substrat (2) vorgeschlagen, bei welchem ein Werkstoff auf das metallische Substrat (2) geschweisst wird. Der Werkstoff ist ein Stahl, der mindestens 0.1 % Kohlenstoff und mindestens 12% Chrom enthält. Der Werkstoff wird durch Laserauftragschweissen auf das Substrat (2) aufgebracht. Ferner wird durch die Erfindung ein Bauteil (1) vorgeschlagen, mit einem metallischen Substrat (2) und einer auf dem Substrat (2) aufgebrachten Erosionsschutzschicht (3), wobei die Erosionschutzschicht (3) mit einem erfindungsgemässen Verfahren hergestellt ist.

## Beschreibung

### Verfahren zur Herstellung einer Erosionsschutzschicht sowie Bauteil mit einer solchen Erosionsschutzschicht

Die Erfindung betrifft ein Verfahren zur Herstellung einer Erosionsschutzschichtchicht auf einem Substrat sowie ein Bauteil mit einer solchen Erosionsschutzschicht gemäss dem Oberbegriff des unabhängigen Anspruchs der jeweiligen Kategorie.

Erosionsbedingte Schäden an Bauteilen stellen in vielen technischen und industriellen Bereichen ein grosses Problem dar. So können beispielsweise in Dampfturbinen durch Wassertröpfchenerosion erhebliche Schäden an den Turbinenschaufeln auftreten. Insbesondere im Niedertemperaturbereich der Turbine oder auch bei Niederdruckdampfturbinen kommt es vor, dass sich aus dem Dampf Wassertröpfchen abscheiden, welche dann gegen die rotierenden Turbinenschaufeln der Rotoren oder die stationären Turbinenschaufeln der Leiträder prallen und dort zu Erosion und damit zu Materialabtrag führen.

Bei den rotierenden Turbinenschaufeln sind es insbesondere die Schaufelvorderkanten, welche besonders der Wassertröpfchenerosion ausgesetzt sind.

Zum Schutz vor solchen Erosionserscheinungen ist es bekannt, die am stärksten der Erosion unterliegenden Bereiche, also beispielsweise die Schaufelvorderkante, nach der Herstellung durch einen gezielten Wärmeeintrag zu härten. Dies kann beispielsweise durch Induktionshärten oder Laserhärten erfolgen. Die damit zu erzielenden Ergebnisse sind jedoch nicht befriedigend.

Ferner ist es bekannt, die Schaufelvorderkante durch Auflöten eines Schilds oder durch Auftragsschweissen einer Hartschicht zu schützen. Sowohl für die Lösung mit dem Schild als auch für das Auftragschweissen ist es heute üblich, Stellite zu verwenden. Stellite, wie beispielsweise Stellit 6, sind wohlbekannte Cobalt-Chrom-Legierungen, die häufig als Hartbeschichtung verwendet werden, um Bauteile gegen Verschleiss, Abrieb oder Korrosion zu schützen.

Der Nachteil der Stellite ist es, dass sie schwer zu verarbeiten sind. Schweissprozesse mit Stelliten sind üblicherweise teuer und nur schwierig zu beherrschen. Es kommt zu Eigenspannungen und Rissbildungen. Auch das Auflöten von Stellite-Schilden ist ein problematischer Prozess, der schwer zu beherrschen ist. Üblicherweise müssen beim Schweissen oder Auflöten von Stelliten anschliessend zusätzliche Wärmebehandlungen durchgeführt werden. Trotz solcher teilweise aufwendigen Nachbehandlungen ist die erzielte Erosionsbeständigkeit und auch die Anhaftung der Stellite auf dem Substrat nicht immer befriedigend.

Ferner sind Stellite wenig geeignet oder sogar ungeeignet für die Reparatur von bereits geschädigten Schaufelvorderkanten, wenn beispielsweise Teile der Schaufelvorderkante neu aufgebaut werden müssen, weil die Stellite als Material für Hartbeschichtungen eigentlich keine Konstruktionswerkstoffe sind.

Das Problem der Wassertröpfchenerosion kann aber auch bei Gasturbinen entstehen. Hier kann Wassertröpfchenerosion insbesondere auf der Verdichterseite der Turbine auftreten, wo Luft angesaugt und anschliessend komprimiert wird. Bei diesem Prozess kann es zum Auskondensieren von Wassertröpfchen aus der angesaugten Luft kommen, die dann auf die Schaufeln der Verdichterstufe der Turbine prallen.

Erosion im Allgemeinen kann auch bei anderen Strömungsmaschinen oder Rotationsmaschinen zu erheblichen Problemen führen. An den Schaufeln der Laufräder von Wasserturbinen, beispielsweise Peltonturbinen, treten häufig Erosionserscheinungen auf, wenn in dem Wasser ein hoher Anteil an Schwemmpartikeln wie Sand oder andere Feststoffe enthalten ist. Erosion durch Sand oder andere Feststoff kann auch in Gasturbinen zu erheblichen Schäden an den Verdichterschaufeln oder an den Turbinenschaufeln führen.

Ferner sollen mit dem Begriff Erosion auch solche Schäden umfasst sein, die durch Kavitation an den Schaufeln von Wasserturbinen oder Rotationspumpen auftreten können. Auch hier besteht der Bedarf, einen besseren Schutz der Bauteile gegen Erosionserscheinungen zu gewährleisten.

Ausgehend von diesem Stand der Technik ist es eine Aufgabe der Erfindung, ein Verfahren vorzuschlagen, mit welchem Bauteile insbesondere von Strömungs- oder Rotationsmaschinen einfach und wirkungsvoll gegen Erosion geschützt werden können. Das Verfahren soll sowohl für die Neuanfertigung als auch für die Reparatur eines Bauteils geeignet sein. Ferner ist es eine Aufgabe der Erfindung, ein erosionsbeständiges Bauteil vorzuschlagen.

Die diese Aufgabe lösenden Gegenstände der Erfindung sind durch die unabhängigen Ansprüche der jeweiligen Kategorie gekennzeichnet.

Erfindungsgemäss wird also ein Verfahren zur Herstellung einer Erosionsschutzschicht auf einem metallischen Substrat vorgeschlagen, bei welchem ein Werkstoff auf das metallische Substrat geschweisst wird. Der Werkstoff ist ein Stahl, der mindestens 0.1 % Kohlenstoff und mindestens 12% Chrom enthält. Der Werkstoff wird durch Laserauftragschweissen auf das Substrat aufgebracht.

Überraschenderweise hat sich gezeigt, dass sich durch Laserauftragschweissen eines Stahls mit hohem Kohlenstoffgehalt auf einem Substrat in einfacher Weise eine sehr gute Erosionsschutzschicht herstellen lässt, die sehr gut anhaftet, eine hohe Härte und eine sehr gute Korrosionsbeständigkeit aufweist.

Zudem sind derartige Stähle preisgünstig, sodass sich das erfindungsgemässe Verfahren deutlich günstiger durchführen lässt als andere Verfahren zum Erosionsschutz.

Allerdings lassen sich diese Stähle konventionell nicht oder nur schwer mit hohem Aufwand wie Vorwärmen und nachgelagerten Wärmebehandlungen schweissen.

Vorteilhaft ist somit ferner, dass Stahl, der für das erfindungsgemässe Verfahren geeignet ist, mittels Laserauftragschweissens in einfacher Weise und prozesssicher verarbeitet werden kann.

Durch die Verwendung des Laserauftragschweissens entsteht zudem auf dem Substrat nur eine schmale Wärmeeintragszone, sodass der Grundwerkstoff des Substrats und sein Wärmebehandlungszustand, wenn überhaupt, nur geringfügig beeinflusst wird. Nachfolgende Wärmebehandlungen können daher entfallen, was das erfindungsgemässe Verfahren, einfacher, schneller und wirtschaftlicher macht.

Besonders vorteilhaft im Hinblick auf die Erosionsbeständigkeit ist es, wenn der Werkstoff mindestens 0.2 % Kohlenstoff und vorzugsweise mindestens 0.4% Kohlenstoff enthält. Auch derartig hochkohlestoffhaltige Stähle lassen sich mittels Laserauftragschweissens noch problemlos verarbeiten.

Eine bevorzugte Ausführungsform ist es, wenn mit dem erfindungsgemässen Verfahren die Reparatur eines Bauteils durchgeführt wird. Die für das erfindungsgemässe Verfahren verwendeten Werkstoffe eignen sich im Unterschied zu anderen zum Erosionsschutz eingesetzten Materialien insbesondere auch als Konstruktionswerkstoff, sodass mit dem erfindungsgemässen Verfahren der Wiederaufbau beschädigter Oberflächen in einfacher Weise möglich ist.

Eine andere bevorzugte Ausführungsform ist es, mit dem erfindungsgemässen Verfahren die Neuanfertigung eines Bauteils durchzuführen. Durch die erfindungsgemässe Herstellung einer Erosionsschutzschicht auf einem metallischen Substrat lassen sich in einfacher Weise Neuteile herstellen, die eine ausgezeichnete Erosionsbeständigkeit aufweisen.

Gemäss einer bevorzugten Anwendung ist das Bauteil eine Verdichter- oder Turbinenschaufel. Dabei kann es sich um die Turbinenschaufel einer Dampfturbine handeln. Bei diesen treten häufig durch Wassertröpfchen bedingte Erosionsschäden auf. Hier eignet sich das erfindungsgemässe Verfahren sowohl für die Reparatur beschädigter Turbinenschaufeln als auch für den Erosionsschutz bei der Herstellung von neuen Turbinenschaufeln. Es können auch Schaufeln einer Gasturbine sein, wo insbesondere auf der Verdichter- oder Kompressorseite Erosionsschäden durch Wassertröpfchen oder Feststoffpartikel auftreten können. Ferner können die Turbinenschaufeln auch Schaufeln des Laufrads einer Flüssigkeits- insbesondere einer Wasserturbine sein, beispielsweise eines Pelton-Laufrads, wo durch Schwemmpartikel wie Sand oder durch Wassereinwirkung Erosionsschäden auftreten können. Erosionsschäden können insbesondere auch durch Kavitation verursachte Schäden sein.

Eine vorteilhafte Massnahme besteht darin, dass nur der Bereich des Substrats mit einer Erosionsschutzschicht versehen wird, welcher im Betriebszustand am stärksten der Erosion unterliegt. Hierdurch lassen sich Material (Werkstoff), Zeit und Kosten sparen. Bei einer Turbinenschaufel einer Gas- oder Dampfturbine ist dieser Bereich beispielsweise die Schaufelvorderkante.

Eine vorteilhafte Verfahrungsführung besteht darin, wenn das Schweissen mit einer mobilen Laservorrichtung erfolgt. Somit können Reparaturen direkt vor Ort ausgeführt werden. Somit lässt sich beispielsweise der kosten- und zeitintensive Ausbau und Transport einer Turbine bzw. eines Turbinenrotors vermeiden, weil defekte oder beschädigte Turbinenschaufeln direkt am Betriebsort der Turbine und meist ohne Demontage des Rotors durchgeführt werden können.

Ferner wird durch die Erfindung ein Bauteil vorgeschlagen mit einem metallischen Substrat und einer auf dem Substrat aufgebrachten Erosionsschutzschicht, wobei die Erosionschutzschicht mit einem erfindungsgemässen Verfahren hergestellt ist.

Auch bei dem erfindungsgemässen Bauteil ist vorzugsweise nur der Bereich des Substrats mit einer Erosionsschutzschicht versehen, welcher im Betriebszustand am stärksten der Erosion unterliegt.

In einem bevorzugten Ausführungsbeispiel ist das Bauteil als Turbinenschaufel oder als Verdichterschaufel ausgestaltet, insbesondere als Schaufel einer Gas- oder Dampfturbine.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: einen Schnitt durch eine Turbinenschaufel einer Dampfturbine, die mittels eines Ausführungsbeispiels des erfindungsgemässen Verfahrens neu angefertigt ist,
- Fig. 2: einen Schnitt durch eine Turbinenschaufel einer Dampfturbine, die mittels eines Ausführungsbeispiels des erfindungsgemässen Verfahrens repariert ist, und
- Fig. 3: ein Diagramm zur Illustration der Erosionsbeständigkeit.

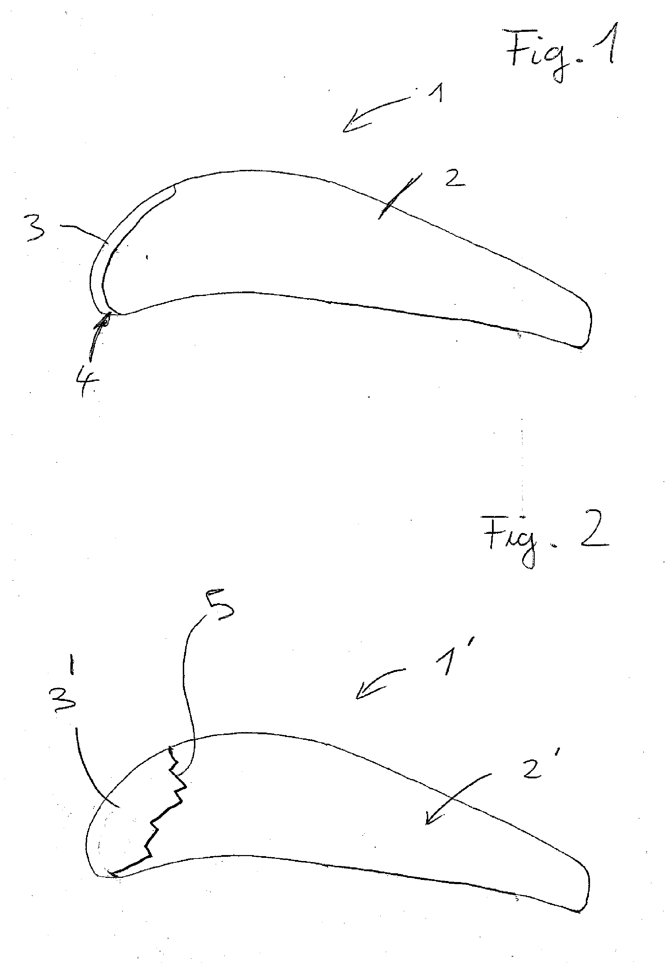

Das erfindungsgemässe Verfahren dient zur Herstellung einer Erosionsschutzschicht 3 (siehe Fig. 1) auf einem metallischen Substrat.

Der Begriff Erosion soll so verstanden werden, dass er durch Kavitation verursachte Effekte oder Schäden umfasst.

Je nach Anwendungsfall kann die Erosionsschutzschicht 3 gegen verschiedene Arten von Erosion schützen, beispielsweise gegen Tröpfchenerosion, speziell Wassertröpfchenerosion, gegen Erosion durch Festkörperpartikel oder Schwemmpartikel wie beispielsweise Sand oder auch gegen Erosionserscheinungen, die durch Kavitation verursacht werden.

Prinzipiell eignet sich das erfindungsgemässe Verfahren für alle Vorrichtungen, in denen Bauteile der Erosion ausgesetzt sind, insbesondere sind dies Strömungsmaschinen, Rotationsmaschinen, Rotationspumpen wie beispielsweise Zentrifugal- oder Axialpumpen, Turbinen im Allgemeinen, Turbinen, die mit Flüssigkeiten betrieben werden - beispielsweise Wasserturbinen mit Pelton-Laufrädern oder anderen Laufrädern - Gasturbinen, Dampfturbinen.

Im Folgenden wird mit beispielhaftem Charakter auf den für die Praxis besonders wichtigen Anwendungsfall Bezug genommen, dass die Erosionsschutzschicht die Turbinenschaufeln einer Dampfturbine gegen Wassertröpfchenerosion schützen soll. Wassertröpfchenerosion kann in Dampfturbinen zu erheblichen Schäden an den Schaufeln und insbesondere an den rotierenden Turbinenschaufeln führen. Speziell im kälteren Bereich der Turbine und/oder bei Niederdruckdampfturbinen kommt es regelmässig vor, dass die Temperatur- und Druckverhältnisse zum Auskondensieren von Wassertröpfchen führen, die dann mit hoher Relativgeschwindigkeit auf die Turbinenschaufeln auftreten und dort durch Materialabtrag für erhebliche Schäden sorgen. Insbesondere ist es die Vorderkante oder die Eintrittskante (leading edge) der Turbinenschaufel, die im Betrieb am stärksten der Erosion unterliegt.

Erfindungsgemäss wird nun ein Verfahren vorgeschlagen, um eine Erosionsschutzschicht 3 auf einem metallischen Substrat herzustellen. Fig. 1 zeigt einen Schnitt durch ein neu angefertigtes Bauteil, das hier als Turbinenschaufel 1 einer Dampfturbine ausgestaltet ist. Die Turbinenschaufel 1 umfasst ein metallisches Substrat 2 und eine auf dem Substrat 2 aufgebrachte Erosionsschutzschicht 3. Die Erosionsschutzschicht 3 ist im Bereich der Schaufelvorderkante 4 angebracht, derart, dass zumindest die gesamte Schaufelvorderkante 4 durch die Erosionsschutzschicht 3 geschützt ist.

Zur Herstellung wird zunächst das metallische Substrat 2 in der Form der Turbinenschaufel in an sich bekannter Weise angefertigt. Dabei kann an der Schaufelvorderkante 4 eine Ausnehmung vorgesehen werden, welche die Erosionschutzschicht 3 aufnimmt. Diese Ausnehmung kann entweder direkt bei der Anfertigung des metallischen Substrats 2 vorgesehen werden, oder nach der Anfertigung durch einen Bearbeitungsschritt wie Fräsen oder Schleifen erzeugt werden. Alternativ ist es natürlich auch möglich, die Erosionsschutzschicht 3 auf die Schaufelvorderkante 4 aufzubringen, ohne dass eine spezielle Ausnehmung dafür vorgesehen ist.

Im nächsten Bearbeitungsschritt erfolgt die Herstellung der Erosionsschutzschicht 3. Diese wird mittels Laserauftragschweissens eines Werkstoffs auf dem metallischen Substrat 2 aufgebracht. Die Technologie des Laserauftragschweissens an sich ist dem Fachmann hinlänglich bekannt und muss daher hier nicht näher erläutert werden. Es eignen sich alle zum Schweissen üblicherweise eingesetzten Laserschweissvorrichtungen, insbesondere Nd:YAG-Laser, Diodenlaser, Faserlaser und Scheibenlaser mit typischen Wellenlängen zwischen 1060 und 1070 nm und CO2-Laser mit einer Wellenlänge von 10600 nm.

Erfindungsgemäss ist der Werkstoff, aus welchem die Erosionsschutzschicht 3 mittels Laserauftragschweissens hergestellt wird, ein Stahl, der mindestens 0.1% Kohlenstoff (C) enthält und mindestens 12% Chrom.

Im Rahmen dieser Anmeldungen sind mit Prozentangaben stets Gewichtsprozente gemeint.

Der hohe Chromgehalt des Stahls verleiht der Erosionsschutzschicht eine sehr gute Korrosionsbeständigkeit. Der Stahl ist insbesondere ein rostfreier Stahl.

Der hohe Kohlenstoffgehalt des Stahls verleiht der Erosionsschutzschicht 3 eine grosse Härte, wodurch die Erosionsbeständigkeit gewährleistet ist.

Der Stahl ist insbesondere ein martensitischer Stahl, das heisst zumindest ein Teil des Gefüges ist Martensit.

Insbesondere ist der Stahl ein härtbarer und luftaushärtender Stahl, das heisst, der Kohlenstoffgehalt des Stahls ist so hoch, dass der Stahl luftaushärtend ist. Dies bedeutet, der Stahl muss nach dem Laserauftragsschweissen nicht mittels Öl oder Wasser gekühlt werden, sondern der Gradient, mit dem der Stahl an der Luft abkühlt ist gross genug, um zumindest teilweise ein martensitisches Gefüge zu erzeugen.

Vorzugsweise hat die Erosionsschutzschicht 3 nach ihrer Abkühlung zumindest überwiegend ein martensitisches Gefüge.

In der Praxis hat es sich besonders bewährt, wenn der Werkstoff ein Stahl ist, der mindestens 0.2% Kohlenstoff und vorzugsweise mindestens 0.4 % Kohlenstoff enthält. Durch diesen hohen C-Gehalt erhält die Erosionschutzschicht 3 eine besonders gute Härte. Da zum Schweissen die Technologie des Laserauftragsschweissen verwendet wird, stellt der hohe Kohlenstoffgehalt für den Schweissprozess kein Problem dar.

Es hat sich beispielsweise gezeigt, dass sich mit dem Stahl X42 Cr13 sehr gute Ergebnisse erzielen lassen. Dieser kommerziell erhältliche Stahl hat einen Kohlenstoffgehalt von 0.42% und einen Chromgehalt von 13 %. Als weiteres Beispiel sei hier der Stahl X20 Cr13 genannt, welcher einen Kohlenstoffgehalt von 0.2% und eine Chromgehalt von 13 % aufweist.

Bei der Herstellung von neuen Schaufeln 1 beträgt die Dicke der Erosionsschutzschicht üblicherweise 0.2 bis 1.5 mm

Fig. 2 zeigt ein Beispiel, bei welchem die Reparatur eines Bauteils durchgeführt wurde. In Fig. 2 ist ein Schnitt durch eine Turbinenschaufel 1' einer Gasturbine dargestellt, die mittels eines Ausführungsbeispiels des erfindungsgemässen Verfahrens repariert ist.

Während des Betriebs der Dampfturbine ist an dieser Turninenschaufel im Bereich der Schaufelvorderkante durch Wassertröpfchenerosion ein erheblicher Materialabtrag erfolgt. Vor durchführung der Reparatur hatte die Schaufelvorderkante die durch die Linie 5 dargestellte Kontur bzw. Oberfläche. Erfindungsgemäss wird nun auf dem verbleibenden metallischen Substrat 2' - gegebenenfalls nach vorangehenden Reinigungs oder vorbereitungsschritten - durch Laserauftragschweissen die Erosionsschutzschicht 3' hergestellt, indem ein Stahl mit mindestens 0.1% C und mindestens 12 % Cr auf das metallische Substrat 2' aufgeschweisst wird.

Hierbei wird der Laserschweissprozess so gesteuert, dass die ursprüngliche Form der Turbinenschaufel 1' und insbesondere die ursprüngliche Form der Schaufelvorderkante rekonstruiert wird. Hierbei ist es besonders vorteilhaft, dass der erfindungsgemäss verwendete Werkstoff ein Konstruktionswerkstoff sein kann, also ein Werkstoff, mit dem nicht nur eine Beschichtung erfolgen kann, sondern mit dem auch die ursprüngliche Form des Bauteils wieder aufgebaut werden kann. Insbesondere ist auch hierfür der Stahl X42 Cr13 geeignet.

Besonders vorteilhaft speziell im Hinblick auf Reparaturmassnahmen ist es, für das Laserauftragsschweissen eine mobile Laservorrichtung zu verwenden. Mit einer mobilen Laservorrichtung können die Turbinenschaufeln direkt am Betriebsort und gegebenenfalls ohne komplette Demontage der Turbine bzw. des Rotors repariert werden. Dies ist unter wirtschaftlichen Aspekten besonders vorteilhaft, weil Transportzeiten für die zu reparierenden Turbinenschaufeln entfallen und je nach Anwendungsfall auch Montage- bzw. Demontagearbeiten eingespart werden können. Somit lassen sich die durch die Reparatur bedingten Stillstandszeiten deutlich reduzieren.

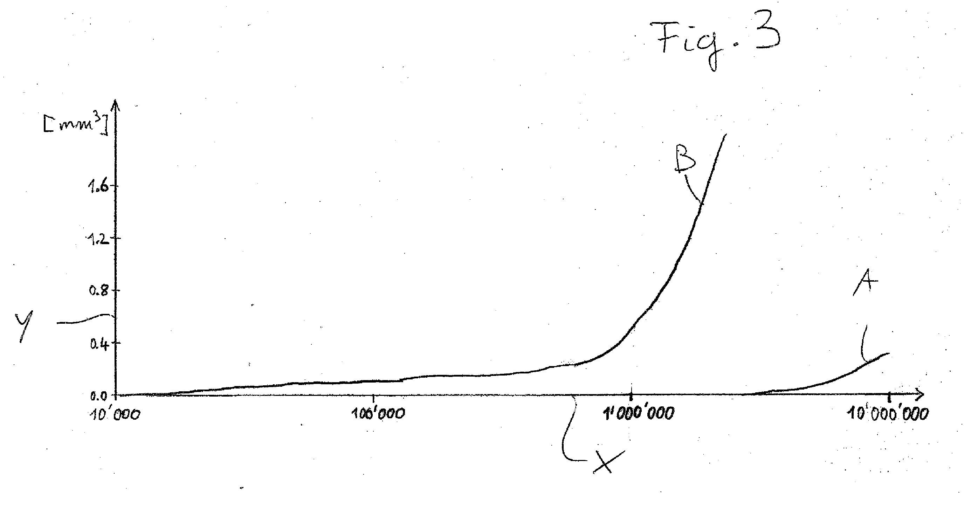

Im Folgenden wird nun anhand eines Beispiels und anhand von Fig. 3 eine erfindungsgemäss hergestellte Erosionsschutzschicht mir einer Schutzschicht aus dem Stand der Technik verglichen. Die Versuche zur Erosionsbeständigkeit werden in einem Wassertropfen-Erosionsprüfstand durchgeführt. Dort wird eine Probe des zu testenden Materials auf einem Rotor platziert. Mittels einer stationären Einspritzdüse werden Wassertröpfchen ausgestossen, welche zyklisch auf die auf dem rotierenden Rotor angebrachte Probe auftreffen.

Die Form und die Abmessungen der Proben sind durch den Prüfstand bedingt. Die Proben sind im Wesentlichen quaderförmig mit 25mm X 8mm X 3 mm und mit einer Fase von 30° versehen. Eine der Proben, die Probe A ist gemäss einem erfindungsgemässen Verfahren hergestellt und besteht aus einem metallischen Substrat 2 auf dem die Erosionsschutzschicht 3 vorgesehen ist. Die Erosionsschutzschicht 3 besteht aus dem Stahl X42 Cr13, der durch Laserauftragsschweissen auf das Substrat 2 aufgebracht wurde.

Als Vergleich wird eine Probe B gemäss Stand der Technik verwendet, aus einem Material, das heute häufig eingesetzt wird und für seine gute Erosionsbeständigkeit bekannt ist. Auf einen metallischen Grundkörper wird ein geschmiedeter Streifen aus Stellite 6 aufgelötet.

Die beiden Proben werden unter den folgenden Versuchsbedingungen getestet: Die Wassertröpfchen haben einen Durchmesser von 0.2 mm und treffen mit einer Geschwindigkeit von 400 m/s auf die jeweilige Probe auf. Es werden bis zu zehn Millionen Zyklen durchlaufen, das heisst die Probe passiert bei ihrer Rotation die stationäre Einspritzdüse bis zu zehn Millionen Mal, was bedeutet, dass bis zu zehn Millionen Wassertröpfchen auf die Probe aufschlagen.

Als Ergebnis für den Test zur Wassertröpfchenerosion wird der Massenverlust der jeweiligen Probe bestimmt. Aus diesem wird dann mithilfe der jeweiligen spezifischen Dichte der Volumenverlust berechnet. Die Dichte für die Probe A beträgt 7.70 g/cm³, die Dichte für die Probe B beträgt 8.15 g/cm³.

Das Ergebnis ist in Fig. 3 graphisch dargestellt. Auf der horizontalen Achse X, die eine logarithmische Teilung hat, ist die Anzahl der Zyklen aufgetragen, welche identisch ist mit der Anzahl der Aufpralle (Impingements). Auf der vertikalen Aches Y, die eine lineare Teilung hat, ist der Volumenverlust in mm³ aufgetragen. Die mit A gekennzeichnete Kurve gehört zu der Probe A, die gemäss dem einem erfindungsgemässen Verfahren hergestellt ist, die mit B gekennzeichnet Kurve gehört zu der Probe B, die gemäss Stand der Technik hergestellt ist. Es ist deutlich zu erkennen, dass die Probe A eine wesentlich bessere Erosionsbeständigkeit aufweist. Während bei Probe B der Volumenverlust nach einer Million Zyklen bereits 0.49 mm³ beträgt und dann rapide zunimmt, beträgt der Volumenverlust bei Probe A selbst nach zehn Millionen Zyklen erst 0.317 mm³.

Ferner wird noch eine Inkubationsperiode bestimmt, die ein Mass dafür ist, wie lange es dauert, bis eine Schädigung durch Materialabtrag auftritt. Diese Inkubationsperiode ist definiert als die Anzahl der Zyklen, bei der ein Volumenverlust von 0.1 mm³ erreicht ist. Die Inkubationsperiode für die erfindungsgemäss hergestellte Probe A beträgt sechs Millionen Zyklen, während die Inkubationsperiode für die Probe B lediglich 100'000 Zyklen beträgt.

Dieses Ergebnis demonstriert sehr deutlich, dass sich mit dem erfindungsgemässen Verfahren Erosionsschutzschichten herstellen lassen, die wesentlich besser gegen Erosion schützen als andere Verfahren, die vom Stand der Technik bekannt sind.

Auch wenn hier auf das praxisrelevante Bauteil einer Turbinenschaufel für eine Dampfturbine Bezug genommen wurde, so ist die Erfindung keinesfalls auf diese Bauteile beschränkt.

Wassertröpfchenerosion kann beispielsweise auch auf der Kompressorseite bzw. der Verdichterseite einer Gasturbine auftreten. Das erfindungsgemässe Verfahren eignet sich insbesondere auch, um auf solchen Verdichterschaufeln einer Gasturbine eine Erosionsschutzschicht herzustellen, sowohl bei der Neuteilanfertigung als auch bei der Reparatur geschädigter Schaufeln in Gasturbinen.

Das erfindungsgemässe Verfahren eignet sich auch, um die Laufräder bzw. die Schaufeln in Flüssigkeitsturbinen, in Wasserturbinen, beispielsweise Peltonturbinen, in Rotationspumpen oder in Strömungsmaschinen allgemein gegen Schädigungen durch Kavitationseffekte zu schützen.

Ferner ist das erfindungsgemässe Verfahren geeignet, um die Laufräder bzw. die Schaufeln in Gas-, Dampf-, und Flüssigkeitsturbinen, in Wasserturbinen, beispielsweise Peltonturbinen, in Rotationspumpen oder in Strömungsmaschinen allgemein gegen Erosionsschäden zu schützen, die durch Festkörperpartikel, beispielsweise Sand, oder durch Schwemmpartikel verursacht werden können.

Dementsprechend können die erfindungsgemässen Bauteile insbesondere auch als Turbinenschaufeln in allen Turbinentypen, als Schaufeln von Laufrädern, als Laufräder im Allgemeinen oder als sonstige der Erosion ausgesetzte Komponenten in Rotations- und Strömungsmaschinen ausgebildet sein.

In Turbinen eignet sich das erfindungsgemässe Verfahren sowohl für die Schaufeln bzw. Blätter der rotierenden Maschinenteile (Rotoren), als auch für die Schaufeln der stationären Komponenten, wie beispielsweise der Leiträder.

## Patentansprüche

1. Verfahren zur Herstellung einer Erosionsschutzschicht auf einem metallischen Substrat, bei welchem ein Werkstoff auf das metallische Substrat (2, 2') geschweisst wird, **dadurch gekennzeichnet, dass** der Werkstoff ein Stahl ist, der mindestens 0.1 % Kohlenstoff und mindestens 12% Chrom enthält, und dass der Werkstoff durch Laserauftragschweissen auf das Substrat (2, 2') aufgebracht wird.

2. Verfahren nach Anspruch 1, bei welchem der Werkstoff mindestens 0.2 % Kohlenstoff und vorzugsweise mindestens 0.4% Kohlenstoff enthält.

3. Verfahren nach einem der vorangehenden Ansprüche, mit welchem die Reparatur eines Bauteils (1') durchgeführt wird.

4. Verfahren nach einem der vorangehenden Ansprüche, mit welchem die Neuanfertigung eines Bauteils (1) durchgeführt wird.

5. Verfahren nach einem der Ansprüche 3 oder 4, bei welchem das Bauteil (1, 1') eine Verdichter- oder Turbinenschaufel ist.

6. Verfahren nach einem der vorangehenden Ansprüche, wobei nur der Bereich des Substrats (2) mit einer Erosionsschutzschicht (3) versehen wird, welcher im Betriebszustand am stärksten der Erosion unterliegt.

7. Verfahren nach einem der vorangehenden Ansprüche, bei welchem das Schweissen mit einer mobilen Laservorrichtung erfolgt.

8. Bauteil mit einem metallischen Substrat (2, 2') und einer auf dem Substrat (2, 2') aufgebrachten Erosionsschutzschicht (3, 3'), **dadurch gekennzeichnet, dass** die Erosionschutzschicht (3, 3') mit einem Verfahren gemäss einem der vorangehenden Ansprüche hergestellt ist.

9. Bauteil nach Anspruch 7, wobei nur der Bereich des Substrats (2, 2') mit einer Erosionsschutzschicht (3, 3') versehen ist, welcher im Betriebszustand am stärksten der Erosion unterliegt.

10. Bauteil nach einem der Ansprüche 7 oder 8 ausgestaltet als Turbinenschaufel oder Verdichterschaufel, insbesondere als Schaufel einer Gas- oder Dampfturbine.
